Europäisches Patentamt

European Patent Office

Office européen des brevets

(19)

(11) Veröffentlichungsnummer: **0 032 755**
A2

## (12) EUROPÄISCHE PATENTANMELDUNG

(21) Anmeldenummer: **81101898.5**

(22) Anmeldetag: **30.06.79**

(51) Int. Cl.³: **F 27 B 9/20**, F 27 B 9/24

(30) Priorität: **15.07.78 DE 2831251**

(43) Veröffentlichungstag der Anmeldung: **29.07.81**
**Patentblatt 81/30**

(84) Benannte Vertragsstaaten: **FR GB NL**

(60) Veröffentlichungsnummer der früheren Anmeldung nach
Art. 76 EPÜ: **0007464**

(71) Anmelder: **SMIT OVENS NIJMEGEN B.V.,**
**Groenestraat 265, Nijmegen (NL)**

(72) Erfinder: **Wiersma, Tjeerd G., c/o Smit Ovens Nijmegen**
**B.V. Groenestraat 265, Nijmegen (NL)**

(74) Vertreter: **Schulze Horn, Stefan, Dipl.-Ing. et al,**
**Goldstrasse 36, D-4400 Münster (DE)**

(54) **Hubplattenofen.**

(57) Ofen mit einem Ofenkanal, der mit seitlich und gegebenenfalls mittig angeordneten Auflagern versehen ist, auf denen Tragplatten für das Brenngut abhebbar seitlich geschützt aufliegen, und mit von unten die Tragplatten von den Auflagern abhebenden, in einer Transportrichtung tragenden und nach Erreichen einer Schrittlänge wieder auf die Auflage absetzenden Hubvorrichtung. Die Hubvorrichtung besteht aus Stempeln, auf deren Oberseite Stützplatten aufgelegt sind. Diese bilden einen in Längsrichtung im wesentlichen geschlossenen Belag. Die Tragplatten liegen auf den Stützplatten auf und berühren sich an den Seiten. Sie sind jedoch nicht fest miteinander verbunden, sondern ragen nur mit an den Stützplatten befindlichen, nach unten weisenden Zungen in Vertiefungen (14) hinein.

*1*

Die Erfindung betrifft einen Ofen mit einem Ofenkanal, der mit seitlich und gegebenenfalls mittig angeordneten Auflagern versehen ist, auf denen Tragplatten für das Brenngut abhebbar seitlich gestützt aufliegen, und mit von unten die Tragplatten von den Auflagern abhebenden, in einer Transportrichtung tragenden und nach Erreichen einer Schrittlänge wieder auf die Auflager absetzenden Hubvorrichtung.

Auf dem Gebiete der Plattenöfen sind zwei Grundprinzipien bekannt. Das eine betrifft den sogenannten Schubplattenofen, bei dem eine Reihe von Platten, auf denen sich das Brenngut befindet, durch einen am Anfang des Ofens befindlichen Stoßmechanismus in Transportrichtung vorgeschoben wird. Ein solcher Ofen ist beispielsweise in der DE-OS 1 948 724 beschrieben. Es hat sich herausgestellt, daß derartige Schubplattenöfen Nachteile haben, die ihren Einsatz begrenzen. Bei dem Transport sind jeweils die gesamten Reibungs- und Trägheitskräfte der Schubplatten mit Brenngut durch die vordere Platte aufzunehmen, so daß jede Platte eine bestimmte Dicke haben muß. Das Totgewicht der Schubplatten ist daher relativ hoch. Hierdurch ergibt sich auch eine unerwünscht hohe Wärmekapazität, die die Steuerung des Temperaturverlaufes innerhalb des Ofens erschwert und einen hohen Energieverlust hervorruft. Außerdem muß der Bahnverlauf für die Schubplatten

2

sehr genau festgelegt werden, da schon kleinere Abweichungen von einer Ideallinie das Herausbrechen der Schubplatten aus dem Verband bedeuten und damit eine Stillsetzung des Ofens hervorrufen können.

Es ist jedoch eine andere Entwicklung bekannt, bei der ein Ofen zwar mit Platten der eingangs genannten Art ausgestattet, jedoch unterhalb der Platten ein Hubbalken angeordnet ist, der die Gesamtheit der Platten anhebt, um eine Schrittlänge vorwärts bewegt und anschließend wieder absetzt. Ein solcher Ofen ist in der US-PS 3 633 885 beschrieben. Im Ofenkanal entfällt eine Transportvorrichtung; lediglich unterhalb der zu transportierenden Platten mit dem Brenngut ist ein auf- und abgehender Hubbalken vorgesehen. Jedoch hat auch der Hubbalkenofen gemäß US-PS 3 633 885 gewisse Nachteile, die es angezeigt erscheinen lassen, ihn zu verbessern. Durch die relativ große Oberfläche des Hubbalkens, der als eine Art Boden fungiert, wird eine Pumpwirkung innerhalb des unter der Brennkammer liegenden, den Hubbalken aufnehmenden Hohlraumes erzeugt, der einen Teil der in der Brennkammer sich befindenden Schutzgasatmosphäre nach unten zieht oder in seiner Zusammensetzung und Temperatur stört. Außerdem kann eine Heizung nur oberhalb des Brenngutes angebracht werden; unterhalb des Brenngutes, d. h. im Bereich des Hubbalkens, ist aus konstruktiven Gründen nicht genug Platz vorhanden, um Heizwicklungen in praktisch anwendbarer Anzahl aufzunehmen. Hierdurch ist die Konstanthaltung der Temperatur oder das Erzeugen eines bestimmten Temperaturprofiles über die Ofenlänge und gegebenenfalls Ofenbreite nicht ohne weiteres zu gewährleisten. Schließlich ist es von dem konstruktiven Prinzip der US-PS 3 633 885 nicht möglich, synchron mehrere nebeneinanderliegende Plattenreihen mit Brenngut gleichzeitig zu bewegen;

3

gemäß dem Stand der Technik ist daher immer nur eine einzeilige Plattenreihe in Bewegung zu halten. Dies erfordert demgemäß relativ lange Öfen, wenn ein bestimmter Brenngut-Durchsatz gewährleistet werden soll.

Demgegenüber stellt sich die Aufgabe, zwar von dem Prinzip des Schubplattenofens abzugehen, trotzdem aber das Prinzip der angehobenen und schrittweise vorwärtsbewegten Platten zu verwenden und hierbei insbesondere folgende Aufgaben zu lösen:

a) Bei dem Auf- und Abgehen des Hubelementes unterhalb der Platten soll eine möglichst geringe Pumpwirkung hervorgerufen werden, um die Temperatur und insbesondere die Zusammensetzung der Schutzgasatmosphäre möglichst wenig zu stören;

b) es soll von der Konstruktion her möglich sein, Heizungsvorrichtungen auch unterhalb der Hubplatten mit dem Brenngut anzubringen, so daß die Temperaturgleichmäßigkeit über die Breite des Ofenkanals weitgehend einzuhalten ist;

c) weiterhin soll es von der Konstruktion her möglich sein, die Arbeitsbreite des Ofens zu vergrößern, d. h. die Tragplatten mit dem Brenngut in mehreren Reihen nebeneinander anzuordnen;

d) die Energieverluste sollen möglichst gering gehalten werden, indem das Tara-Netto-Verhältnis von Platten zu Brenngut möglichst klein gehalten wird.

Diese und weitere Aufgaben, die der Fachmann der Beschreibung entnehmen kann, werden mit einem Ofen der eingangs genannten Art gelöst, bei dem die Hubvorrichtung im Bereich unterhalb der Tragplatten

4

aus einzelnen Stempeln besteht, auf deren Oberseite Stützplatten aufgelegt sind, die in Längsrichtung einen im wesentlichen geschlossenen Belag bilden.

Im Unterschied zu dem Ofen gemäß US-PS 3 633 885, bei dem ein starrer Balken, also ein beweglicher Ofenboden die Tragplatten jeweils schrittweise anhebt, ist das eigentliche Hubelement im vorliegenden Falle aus einzelnen Stempeln gebildet, die auf ihrer Oberseite beweglich aufgelegte Platten, sogenannte Stützplatten, tragen, deren Länge nicht mit der der Tragplatten übereinstimmen muß.

Tragplatten und darunterliegende Stützplatten können aus relativ dünnem, temperaturfestem Material hergestellt werden. Um auch bei leicht gekrümmten Tragplatten zwischen den beiden Plattenarten einen statisch bestimmten Tragekontakt zu halten, werden die Stützplatten an ihrer Oberseite mit Stegen versehen, auf denen die Tragplatten während des Hubschrittes aufliegen.

Während des Transportes können die Tragplatten verrutschen oder in anderer Weise die genaue, in Ofenachse liegende Ausrichtung verlassen. Um dieses zu vermeiden, ist in einer Ausführungsform die Ausmauerung mit einer Führung, z. B. einem Führungssteg, versehen, der vorzugsweise seitlich etwas abgeschrägt angeordnet ist und die Auswanderung verhindert.

Die die Hubbewegung ermöglichenden Stempel können in relativ kleinen Schächten innerhalb der Bodenausmauerung der Brennkammer eingemauert sein, so daß ihre Hubwirkung sehr klein ist. Es wird konstruktiv dabei so verfahren, daß die Oberseite der Stempel mit Vertiefungen versehen ist, die in an der Stirnseite der Stützplatten befindliche, nach unten wei-

5

sende Zungen hineinragen. Die Zungen sorgen dafür,
daß bei einer Bewegung der Stützplatten diese nicht
von den Stempeln abrutschen oder abgezogen werden
können.

Die Auf- und Abbewegung sowie die Längsbewegung der
Stempel geschieht dadurch, daß diese beispielsweise
über Hubstangen bewegbar sind, die auf einem mit
Rädern versehenen heb- und senkbaren Hubbalken angebracht sind, der Teil eines höhen- und längsbeweglichen angeordneten Fahrgestelles ist. Dabei wird
eine Bewegung vollzogen, bei der die Hubhöhe zwischen
10 und 25 mm und die Schrittlänge zwischen 5 und 30
mm liegen. Diese Werte stellen selbstverständlich
nur Anhaltswerte dar. Bei Versuchen haben diese
Werte sich als vorteilhaft herausgestellt.

Der Inhalt weiterer Unteransprüche ergibt sich aus
der nachfolgenden Beschreibung.

Zur Erläuterung der Erfindung sind in den beigefügten
Zeichnungen Ausführungsbeispiele des Hubplattenofens gemäß Erfindung dargestellt. Die einzelnen
Figuren zeigen:

Figur 1  einen Längsschnitt durch einen Teil des
         Hubplattenofens;

Figur 2  einen Querschnitt;

Figur 3  ein Detail des Antriebes;

Figur 4  einen Antrieb (Detail) in anderer
         Ausführungsform;

Figuren 5a/b/c/d schematisch einen Bewegungsablauf
         bei der Förderung des Brenngutes;

Figur 6  die Durchführung einer Hubstange in anderer Ausführungsform;

Figur 7  eine Schnittansicht gemäß Linie VII ... VII

Figur 8  einen Schnitt durch die Brennkammer bei einer geänderten Ausführungsform.

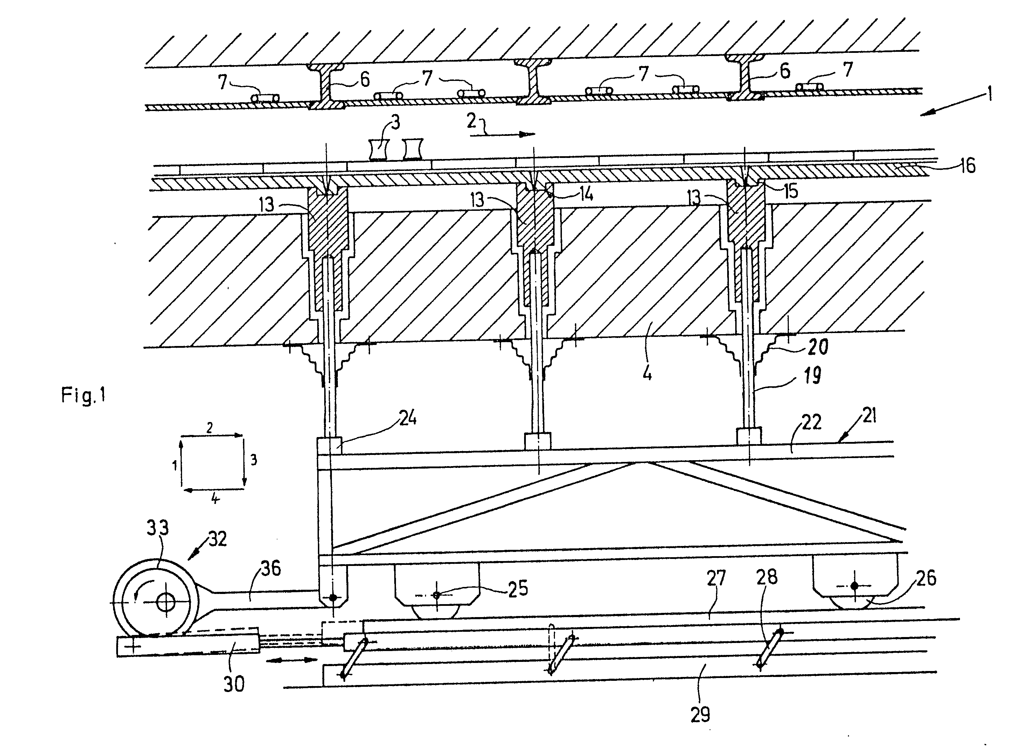

In der Figur 1 ist ein Hubplattenofen im Längsschnitt dargestellt, der gemäß Erfindung mit einer schrittweisen Vorwärtsbewegung des Brenngutes arbeitet. Der Ofenkanal 1 des Ofens, welcher im Querschnitt etwa rechteckig ist, wird in Transportrichtung (Pfeil 2) vom Brenngut 3 durchfahren. Das Ofeninnere kann über seine Länge in verschiedene Abschnitte oder Kammern unterteilt sein, die eine Aufteilung des Ofens in verschiedene Heizzonen ergeben oder in denen verschiedene Atmosphären durch unterschiedliche Gasbeschickung herstellbar sind.

Der Ofenkanal 1 wird an allen vier Seiten von einer Ausmauerung begrenzt, die aus hochtemperaturfester Keramik besteht, beispielsweise aus $Al_2O_3$-$SiO_2$-Gemischen, an sich bekannter Art. Die Kammer ist weiterhin mit Steinwolleeinlagen isoliert und durch ein Gehäuse eingefaßt.

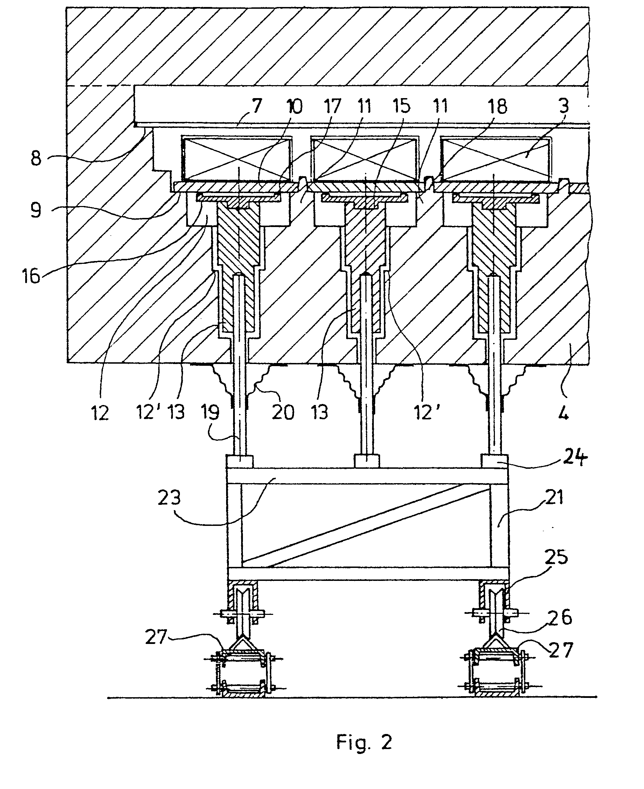

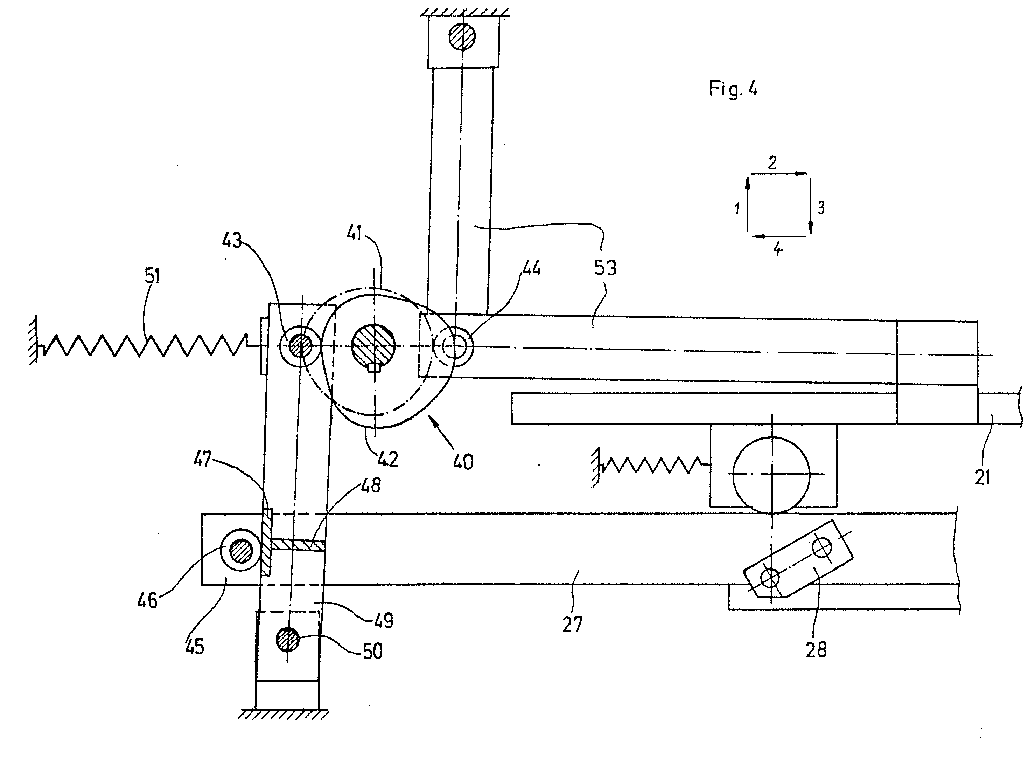

Die Decke 5 der Brennkammer 1 wird von Querträgern 6 getragen, zwischen die Heizelemente 7 auf Platten aufgelegt sind. Die Seitenwände (vgl. Figur 2) des Ofenraumes weisen stufenförmig ausgebildete Schultern 8, 9 auf. Die mit 9 bezeichnete Schulter stützt seitlich aufgelegte Tragplatten 10 ab, auf denen das Brenngut 3 steht. Weitere Stützen bilden die aus dem Boden 4 der Brennkammer herausgearbeiteten Stege 11, die so breit sind, daß sie als Auflage für von beiden Seiten aufgelegte Tragplatten dienen können.

Die Stege 11 und die Stufen 9 sind zur Achse des Heizraumes spiegelbildlich angeordnet. Die unterhalb der Tragplatten erkennbaren Hohlräume 12 bilden innerhalb des Bodens runde Löcher.

Wie in Figur 2 dargestellt, sind die Stege 11 weiterhin mit nach oben überstehenden seitlich abgeschrägten Führungsanschlagstegen 18 versehen, die eine seitliche Führung der Tragplatten 10 bewirken.

Die vorzugsweise rechteckigen Tragplatten 10, beispielsweise des Formates 300 x 150 mm bei einer Dicke von 10 mm, die sich untereinander zwar berühren, aber nicht fest miteinander verbunden sind, bilden eine im wesentlichen durchgehende Tragfläche. Die Platten bestehen vorzugsweise aus gesintertem SiC-Werkstoff mit einer Schutzschicht; es handelt sich also um sogenannte Sandwich-Platten. Diese Platten 10 werden schrittweise in Transportrichtung bewegt, wie weiter unten erläutert werden wird.

Der Boden 4 des Ofens ist mit sich nach unten stufenweise verengenden Schächten 12' versehen, in denen Stempel 13 auf- und abbewegbar angeordnet sind. Weiterhin liegt ein Teil des stirnseitigen Randes der Stützplatten 16 auf der Oberseite der Stempel auf. Die Länge der Stützplatten 16 entspricht demnach dem Abstand der Stempel 13. Die Stützplatten, welche vorzugsweise aus nitridgebundenen SiC-Gemischen bestehen, tragen die Tragplatten 10. Die Stützplatten sind ausgelegt auf hohe Wärmeleitfähigkeit und niedrige Wärmespannungen.

Die Zungen 15 sitzen jeweils an der Stirnseite der Stützplatten 10; ihre Breite beträgt etwa ein Viertel der Breite der Stützplatten. Die Stützplatten besitzen jeweils etwa die zweieinhalbfache Länge

8

der Tragplatten 10, welche auf den Stützplatten aufliegen und einen im wesentlichen geschlossenen Belag bilden. Die in die Vertiefung 14 eingelegten Plattenzungen 15 können sich bei einer Auf- und Abbewegung der Stempel ausreichend frei bewegen, so daß auch unterschiedliche Stempelhöhen mit Schrägstellung der Stützplatten innerhalb gewisser Grenzen möglich sind.

Wie aus der Figur 2 zu erkennen ist, ist die Breite der Stützplatten 16 etwas kleiner als die Breite der Tragplatten 10. Die Seitenränder 17 stehen nach oben über die Mittelfläche vor, so daß die Tragplatten von den Stützplatten nur im Bereiche der Ränder 17, die entsprechende Stege bilden, kontaktiert werden. Hierdurch wird bei Durchbiegung oder Wölbung der Stützplatten immer für einen ausreichenden Tragekontakt gesorgt. Die Zungen 15 liegen in der Plattenachse und nehmen etwa ein Viertel der Gesamtplattenbreite ein. Die Zungen 15 sind einheitlich aus dem Material der Stützplatten 16 angefertigt oder werden nachträglich mit dieser verbunden.

Die Stempel 13 werden getragen von Hubstangen 19, die aus Metallrohr bestehen und durch einen gasdichten, elastischen Balg 20 gehalten sind. Die Balge 20 bestehen aus einem konusförmigen Gummibelag aus temperaturfestem Silikonkautschuk und dichten die Hubstange nach Art einer Manschette gasdicht ab. Die Temperaturbeständigkeit ist dabei nicht kritisch, da sich die Teile nicht über $130^{o}$ C erhitzen, auch wenn im Ofenkanal eine Temperatur von $1500^{o}$ C herrscht.

Nach unten enden die Hubstangen 19 auf einem Fahrgestell 21, das mit Längsstreben 22 in Richtung der Aufreihung der Hubstempel 13 in Ofenlängsrichtung und mit Querstreben 23 senkrecht dazu bestückt

ist.

Über die mit einem Verstellgewinde ausgestatteten Fußteile 24 trägt das Gestell die Hubstangen 19. Mit Hilfe des Verstellgewindes kann eine Höhen-Feinjustierung der Hubstangen erfolgen.

Das Fahrgestell 21 ruht über Lager 25 auf zwei Räder-Paaren 26, die sich auf zwei auf- und abbewegbaren Hubschinen 27 abstützen. Die beweglichen, oberen Hubschienen 27 sind über an ihren Enden gelenkig verbundene Trägerlaschen 28 mit den unten angeordneten, ruhenden Tragschienen 29 verbunden. Über eine Kol-ben-Zylinder-Anordnung 30 ist die Hubschiene 27 in Ofenachsenrichtung verschiebbar, wobei sie gleichzeitig eine Höhenverstellung erfährt.

Eine synchrone, weitere Bewegung führt das Fahrgestell 21 mit Hilfe eines Exzentertriebes 32 durch. Über das exzentrisch gelagerte Rad 33, welches über eine Magnetkupplung 34 mit einem Kegelzahnradantrieb 35 abgetrieben wird, kann die Stange 36 hin- und herbewegt werden. Die Antriebswelle 37 des Zahntriebes hat beispielsweise eine Drehgeschwindigkeit von 7,5 Umdrehungen /min. Hierbei wird das Gestell 21 um eine bestimmte kleine Strecke bewegt. Durch Magnetkupplung 31 wird die Bewegung jeweils unterbrochen, wenn eine bestimmte Bewegungsphase erreicht ist. Durch die beschriebenen Bewegungselemente wird damit eine auf- und abgehende mit einer in Achsenrichtung hin- und hergehenden Bewegung des Stempels erzeugt.

In der Figur 4 ist ein Antrieb für die Vertikal- und Horizontalbewegung dargestellt, bei dem die Steuerung des Fahrgestelles 21 mit Hilfe eines Kurvengetriebes 40 erfolgt. Zwei Kurvenscheiben 41 und 42 sorgen für die horizontale bzw. vertikale Bewegung über mit Teilen des Gestelles 21 verbundenen Rollen 43, 44, die auf den Flanken der Kurvenscheiben abrollen (43 auf 42 bzw. 44 auf 41). Beide Kurvenscheiben sitzen auf derselben Welle. Die Form der Scheibenkurve wird nach den vorgeschriebenen Bewegungsgesetzen bestimmt. Die Hubschiene 27 ist an einem Ende 45 mit einer Rolle 46 versehen, die auf der Flachseite 47 eines Balkens 48 abrollt, der mit einem Hebelbaum 49 starr verbunden ist. Der Baum 49 ist bei 50 gelagert und wird durch die Zugfederanordnung 51 (im Bild) nach links gezogen. Die Federkraft der Federanordnung 51 kompensiert zum Teil das Gewicht der Hubplatten-Anordnung, die auf den Hubbalken 27 drückt, und ihn über die Trägerlasche 28 nach rechts zieht. Bei Drehung der Kurvenscheibe 42 schwenkt der Baum 49 nach links, so daß durch die Aufrechtstellung der Lasche 28 sich der Hubbalken hebt. Gleichzeitig drückt die Kurvenscheibe 41 das Fahrgestell 21 derartig, daß dieses sich nicht gleichzeitig nach links bewegen kann, sondern lediglich eine Vertikalbewegung ausführt. Die gelenkige, L-förmige Balkenanordnung 53 ist derart federbelastet, daß die definierte Stellung der Rolle 44 gegenüber der Welle der Kurvenscheibe 41 gewährleistet ist.

Am Ende der Hubbewegung wird durch Drehung der Kurvenscheibe 41 die Balkenanordnung 53 zusammen mit dem Fahrgestell z. B. um 15 mm nach rechts verschoben. Anschließend wirkt sich die Flankenform der Kurvenscheibe 42 wieder aus und sorgt für eine Absenkung des Hubbalkens 27 bei stillgelegter Horizontalbewegung. Im Tiefpunkt wird dann das Fahrgestell wieder nach links gezogen, wobei die Tragplatten 10 abgelegt sind.

11

Prinzipiell werden damit bei den Ausführungsformen gemäß Figuren 1 bzw. 4 die gleichen Bewegungen des Hubbalkens und der Stützplatten durchgeführt, wie dies auch in den beigefügten quadratischen Diagrammen mit den Bewegungsphasen 1 bis 4 dargestellt ist.

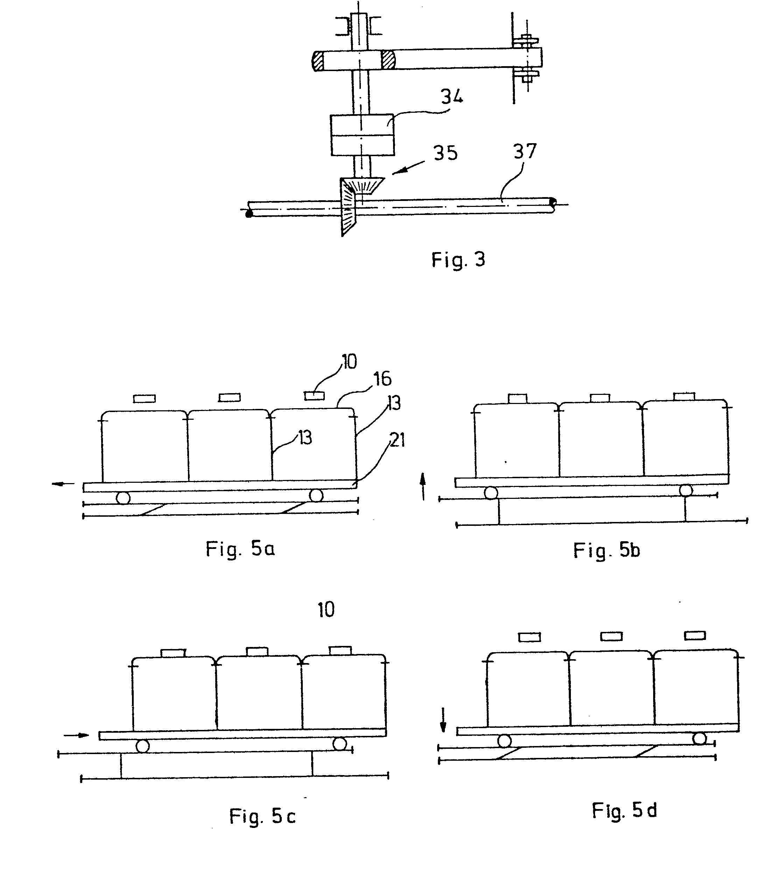

Um die Bewegungsfolge zu verdeutlichen, so ist dies nochmals anhand der Figuren 5a bis 5d beschrieben.

Figur 5a zeigt die tiefste Stellung der Stempel 13, d. h. bei abgelegten Tragplatten 10. In dieser Stellung wird das Fahrgestell 21 unter den Tragplatten 10 hindurchgezogen (Pfeil). Die Tragplatten 10 liegen auf den Schultern 9 bzw. Stegen 11 auf. Während dieser Phase, bei der kein Kontakt zwischen Stütz- und Tragplatten 16 bzw. 10 besteht, wird das Gestell gegen die Transportrichtung gezogen. Bei der nächsten Phase (Figur 5b) steigt die Hubschiene 27 wieder an und hebt über die Stützplatten die Tragplatten auf. Es erfolgt anschließend eine Förderbewegung (Figur 5c) in Transportrichtung, so daß die Platten 10 sich nach rechts bewegen. Durch die Abstimmung der Bewegungen verbleiben zwar die Stützplatten in ihrer relativen Anordnung zu den Stempeln, jedoch wandern die aufliegenden Tragplatten in Transportrichtung weiter. In Figur 5 d senkt sich das Fahrgestell 21 wieder ab und gelangt in die tiefe Stellung, ähnlich wie bei Figur 5 a, jedoch mit nach rechts verschobenem Fahrgestell.

Die Länge des Fahrgestells 21 kann sich über die gesamte Ofenlänge erstrecken, jedoch auch über die Länge unterteilt sein. Frei wählbar sind auch die Abstände der Stempel 13 bzw. der Hubstangen 19 in Längs- und Querrichtung. Es ist möglich, über die Breite des Ofens mehrere Reihen von Tragplatten vorzusehen. Als Arbeitstakt hat sich eine Taktfolge für die Hubbewegung, je nach Transportgeschwindigkeit, etwa von drei bis vier Hüben pro Min. bei einer Vorwärtsbewegung von 2,7 ... 3,6 m pro Stunde als günstig herausgestellt. Die Hubhöhe beträgt beispielsweise 15 mm $\pm$ 5 mm.

Neben einer Transportbewegung in Pfeilrichtung (2) ist auch - bei entsprechender Umschaltung und Synchronisierung der beweglichen Teile - eine Rückwärtsbewegung bzw. Umkehrung der Bewegungsrichtung möglich. Selbstverständlich ist möglich, die Transportgeschwindigkeit in weiten Bereichen zu variieren.

Durch die relativ kleinen Schächte, die gerade genug Spiel haben, um die Bewegung der Stempel zu ermöglichen, ist die Pumpwirkung gegenüber der Schutzgasatmosphäre äußerst gering, so daß Störungen der eingestellten Temperatur und des vorgesehenen Gases kaum möglich sind. Unterhalb der Tragplatten 10 sowie in dem Raum oberhalb der eigentlichen Brennkammer, können Heizelemente angeordnet sein, welche beispielsweise aus gebogenen Widerstandsdrähten bestehen, die auf Platten aufgelegt sind. Eine derartige Anordnung ist beispielsweise in der Deutschen Offenlegungsschrift 1 948 724 beschrieben. Durch die Beheizung von unten und oben und durch die wegen der mechanischen Erfordernisse nur geringe Dicke der Trag- und Stützplatten läßt sich eine sehr gleichmäßige Erwärmung aller Teile bei minimaler Wärmeverlusten ermöglichen, wobei die benötigte bzw. freigesetzte Akkumulationswärme bei Aufheizen und Abkühlen merkbar herabgesetzt ist.

Um die Wärmeverluste weiter herabzusetzen, wird in Abwandlung der Ausführungsform gemäß Figur 1 eine andere Form für die Durchführung der Stempel durch den Boden 4 des Ofens gewählt. Mit dieser Anordnung soll erreicht werden:

hoher Temperaturgradient vom Ofeninneren zur Außenseite
rascher Aus- und Einbau der Stempel und Schächte
minimaler Gasverbrauch
störungsfreier Betrieb.

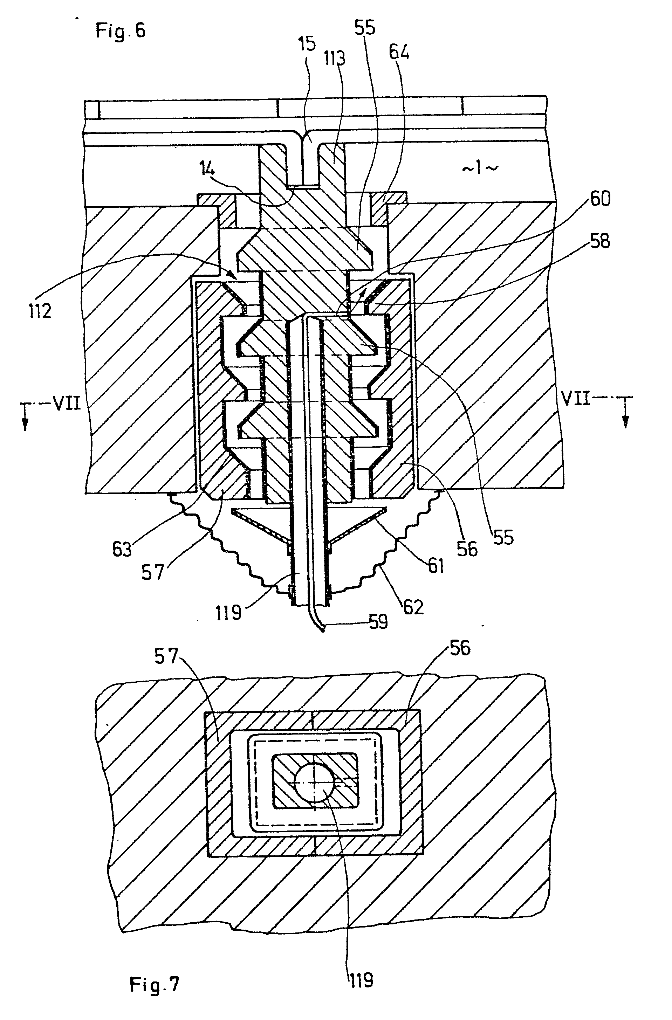

Im einzelnen wird der Aufbau der Stempeldurchführung anhand der Figuren 6 und 7 erläutert. Die Figur 6 zeigt eine ähnliche Ansicht wie bei Figur 1. Auf den Hubstangen 119 sitzende Stempel 113 sind als aufrechtstehende Quader gestaltet, die mehrere (hier drei) übereinander angeordnete, rund um die Außenseite laufende Kragen 55 aufweisen, die im Querschnitt etwa Pulform haben, wobei die nach oben zeigende Seite nach außen abfallend abgeschrägt ist. Generell kann gesagt werden, daß der Erfindungsgedanke darin liegt, Stempel mit wenigstens teilweise um die Außenseite der Stempel umlaufende Kragen zu versehen, wobei die Anzahl der Kragen variieren kann, und diese Stempel in Schächten anzuordnen, die ebenfalls mit Vorsprüngen ausgestattet sind, die sich gegenseitig überlappen und dadurch die von innen nach außen dringende Wärmestrahlung abschirmen. Nach oben läuft der Stempel 113 in ein Kopfende aus, das eine Vertiefung 14 besitzt, in der die Zungen 15 der Stützplatten einrasten. Das Material der Stempel ist feuerfestes Silikat-Material an sich bekannter Art, wobei der Kopf und der Fuß des Stempels 113 aus unterschiedlichen Materialien bestehen können. Die Stempel 113 vollziehen ihre auf- und ab- sowie in Transportrichtung hin- und hergehende Bewegung innerhalb von Schächten 112, um deren Innenseite Nasenstege 58 laufen, die gegenüber dem Kragen 55 in Vertikalrichtung versetzt angeordnet sind. Die Schächte haben im wesentlichen einen rechteckigen oder quadratischen Querschnitt (vgl. Figur 7), wobei die unteren zwei Drittel der Schachthöhe im Querschnitt erweitert sind. In diesem Teil des Schachtes ist eine aus zwei Schalsteinen 56, 57 bestehende Wandung eingesetzt, die die zum Inneren des Schachtes zeigenden Nasenstege 58 besitzen, die im Querschnitt ähnlich pultförmig gestaltet sind, wie die Kragen 55 der Stempel. Wie aus der Draufsicht gemäß Figur 7 erkennbar ist, überlappen sich die Vorsprünge 55 und 58 etwas. Das Spiel in Transportrichtung ist dabei wesentlich größer als in Querrichtung dazu, wie ebenfalls aus der Figur 7 erkennbar ist.

Die Innen- bzw. Außenseite sowie die Vorsprünge 55 und 58 sind ferner auf den Schrägen und auf den Flanken mit einer filzartigen Beschichtung 63 aus feuerfestem Fasermaterial versehen, die einerseits die Dichtigkeit erhöht. Überstehendes Material wird abgetragen, und das Spiel zwischen Stempel und Wand wird minimalisiert.

Weiterhin kann die Hubstange 119 hohl ausgeführt sein und damit an eine Gaseinführung bzw. -abführung über den Schlauch 59 angeschlossen werden, wobei über eine Bohrung 60 innerhalb der Stempel der Gasaustausch in dem Schacht 112 und der Ofenkammer 1 erfolgen kann.

Weiterhin ist an der Hubstange 119 unterhalb des Stempels 113 ein Fangtrichter 61 angebracht, der den Abrieb auffängt und gleichzeitig als Strahlungsschutz dient. Weiterhin ist ein Balg 62 vorgesehen, der für einen gasdichten, flexiblen Abschluß sorgt. Der Abschluß nach oben zur Ofenkammer 1 hin wird verengt durch einen auf den Rand des Schachtes aufgelegten Ringstein 64.

Die Funktion der in den Figuren 6, 7 dargestellten Stempeldurchführung liegt darin, daß bei Bewegung des Stempels in Transportrichtung praktisch immer eine Überlappung der Vorsprünge 55, 58 gewährleistet ist. Ferner wird die von oben eindringende Strahlung weitgehend reflektiert und gelangt nicht in den unteren Teil des Ofens. Tatsächlich haben Messungen ergeben, daß im oberen Bereich des Ofens eine Temperatur von 1500$^\circ$ C herrschen kann, während im Bereich des Balges 62 lediglich 130$^\circ$ C gemessen werden.

Die Beschickung des Ofens erfolgt, indem jeweils mehrere nebeneinanderliegende Reihen von Tragplatten als eine Art Tafel über Transportwagen herangebracht werden und als Gesamtanordnung in den Ofen geschoben werden.

Nach Durchlauf können die Platten in der gleichen Art und Weise wieder abgenommen werden und das auf ihnen stehende Brenngut einer weiteren Verarbeitung zugeführt werden. Wegen der Möglichkeit, mehrere Reihen auf der erhöhten Breite unterzubringen und wegen der Möglichkeit, sowohl eine Heizung oberhalb als auch unterhalb der eigentlichen Brennkammer vorzunehmen, können die Öfen bei gleicher Kapazität und Durchlaufzeit erheblich in ihrer Länge verkürzt werden.

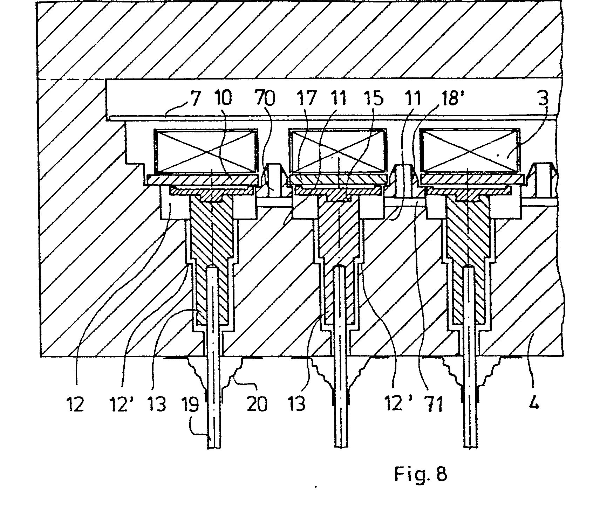

Figur 8 zeigt ein Detail mit anderen Führungsanschlagstegen 18' als im Zusammenhang mit Figur 2 beschrieben. Die Stege 18' sind von Bohrungen 70, 71 durchzogen, die einen Gasdurchlaß aus dem Raum unterhalb der Stützplatten 16 in den Raum oberhalb dieser Platten herstellen. Damit läßt sich die Gasatmosphäre besser homogenisieren. Die leicht abgeschrägten Führungsstege können für jede Tragplatten-

16

Bahn vorhanden, aber auch nur an den Seiten angeordnet sein. Die Abschrägung ist wesentlich, um bei Hubbewegung der Tragplatten deren Ränder freizulegen. Bei Absetzen werden die Tragplatten wieder genau in ihre Bahn eingeführt.

A 1

<u>P a t e n t a n s p r ü c h e :</u>

1. Ofen mit einem Ofenkanal, der mit seitlich und gegebenenfalls mittig angeordneten Auflagern versehen ist, auf denen Tragplatten für das Brenngut abhebbar seitlich gestützt aufliegen, und mit von unten die Tragplatten von den Auflagern abhebenden, in einer Transportrichtung tragenden und nach Erreichen einer Schrittlänge wieder auf die Auflager absetzenden Hubvorrichtung, dadurch gekennzeichnet, daß die Hubvorrichtung im Bereich unterhalb der Tragplatten (10) aus über mit auf die Oberseite einzelner Stempel (13) aufgelegter, einen in Längsrichtung im wesentlichen geschlossenen Belag bildenden Stützplatten (16) hergestellt ist, und daß die Oberseite der Stempel mit Vertiefungen (14) versehen ist, in die an der Stirnseite der Stützplatten befindliche, nach unten weisende Zungen (15) hineinragen.

2. Ofen nach Anspruch 1, dadurch gekennzeichnet, daß die Zungen (15) innerhalb der Vertiefungen (14) frei bewegbar sind.

Fig.1

0032755

Fig. 2

Fig. 4

34

35        37

Fig. 3

10
16
13
13
21

Fig. 5a

Fig. 5b

10

Fig. 5c

Fig. 5d

Fig. 6

Fig. 7

14·03·81 Γ

0032755

12  12' 13  19  20  13  12' 71  4

Fig. 8